(19) Europäisches Patentamt / European Patent Office / Office européen des brevets

(11) **EP 3 439 256 B1**

(12) **EUROPEAN PATENT SPECIFICATION**

(45) Date of publication and mention
of the grant of the patent:
**08.01.2020 Bulletin 2020/02**

(51) Int Cl.:
***H04L 27/26*** *(2006.01)*

(21) Application number: **17184334.5**

(22) Date of filing: **01.08.2017**

(54) **SYNCHRONIZATION DEVICE AND METHOD**

SYNCHRONISIERUNGSVORRICHTUNG UND -VERFAHREN

PROCÉDÉ ET SYSTÈME DE SYNCHRONISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.02.2019 Bulletin 2019/06**

(73) Proprietor: **IHP GmbH - Innovations for High
Performance
Microelectronics / Leibniz-Institut für
innovative Mikroelektronik
15236 Frankfurt (Oder) (DE)**

(72) Inventors:
• **Petri, Markus
15236 Frankfurt (Oder) (DE)**
• **El-Yamani, Ahmed
15230 Frankfurt/Oder (DE)**

(74) Representative: **Eisenführ Speiser
Patentanwälte Rechtsanwälte PartGmbB
Anna-Louisa-Karsch-Strasse 2
10178 Berlin (DE)**

(56) References cited:
**EP-A1- 1 633 097      WO-A1-2005/074223
US-A- 4 538 281**

• **HSUAN-YU LIU ET AL: "A Low-Complexity
Synchronizer for OFDM-Based UWB System",
IEEE TRANSACTIONS ON CIRCUITS AND
SYSTEMS II: ANALOG AND DIGITALSIGNAL
PROCESSING, INSTITUTE OF ELECTRICAL AND
ELECTRONICS ENGINEERS INC, 345 EAST 47
STREET, NEW YORK, N.Y. 10017, USA, vol. 53,
no. 11, 1 November 2006 (2006-11-01), pages
1269-1273, XP011150272, ISSN: 1057-7130, DOI:
10.1109/TCSII.2006.882804**

**Description**

FIELD OF THE INVENTION

The invention relates to a synchronization device for synchronizing on a received signal and to a corresponding synchronization method. The invention relates further to a receiving device for a communication system, which comprises the synchronization device.

BACKGROUND OF THE INVENTION

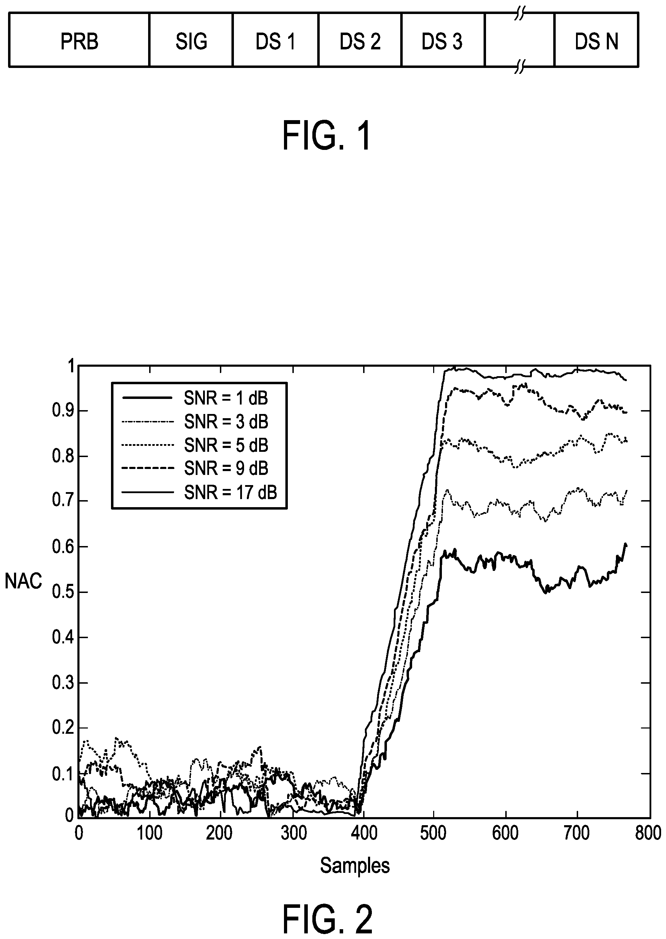

To successfully recover data from a received signal, it is necessary for a receiving device to detect the presence of the received signal and to synchronize its processing to the timing of the received signal. For instance, in frame-based communication systems, the receiving device has to be synchronized to the start of a new frame. To this end, a so-called preamble sequence (or sync sequence), which is a known sequence, is often included in the signal at the sending side.
A frame including a preamble sequence PRB is schematically and exemplarily shown in Fig. 1. In this case, the actual data to be transmitted (referred to as "user data" in the following) is contained in the data symbols DS 1 to DS N. The signal field SIG contains, among other things, information about the modulation and coding used for the transmission of the user data. In systems with adaptive coding and modulation, the signal field is typically transmitted with a pre-defined coding and modulation, whereas the coding and modulation of the data symbols has to be extracted from the signal field. The preamble sequence is used for frame synchronization, i.e., for the detection of the start of a new frame, and for estimating channel transmission characteristics as well as frequency and phase offsets between the sender and the receiver.
In typical wireless, frame-based communication systems, such as WLAN (Wireless Local Area Network) according to IEEE 802.11, the preamble sequence comprises a single or repeated sequence of known transmission symbols, wherein this sequence provides good auto-correlation characteristics. Examples of suitable sequences comprise Golay sequences and Gold codes. The term "good" in this context means that the result of correlating the sequence with differently delayed versions of itself only comprises a single substantive peak value and is low or, more preferably, zero otherwise.
In a wireless system, the receiver may correlate the received signal with the known preamble sequence. If the preamble sequence is of a certain length, it can be ensured that the result of the correlation only provides a value close to 1 at the exact frame start position and that it is close to 0 otherwise. (A correlation is typically normalized such that a correlation value of 1 indicates a "perfect" correlation, whereas a correlation value of 0 indicates no correlation at all.) In order to avoid the complexity of performing a cross-correlation, the preamble sequence in the above-described communication systems preferably comprises a repeated sequence of known transmission symbols, e.g., in the case of an IEEE 802.11ad system, 16 repetitions of the Golay sequence $Ga_{128}$, such that the received signal can be auto-correlated with a (temporally) delayed version of itself. If the delay is periodic with the length of the repeated sequence, the preamble sequence should yield an auto-correlation value of 1 in the ideal, noise-free case. In contrast, other parts of the received signal that do not exhibit the same periodicity should have substantially lower auto-correlation values.
In reality, however, the received signal is typically corrupted by varying degrees of noise, which lowers the attainable auto-correlation values for the preamble sequence. This is demonstrated in Fig. 2, which shows a graph that exemplary illustrates results of an auto-correlation experiment performed by the inventors. In this experiment, a preamble sequence of a PLCP protocol data unit (PPDU) according to the IEEE 802.11ad standard was padded at the front with 512 samples of additive white Gaussian noise (AWGN) in order to simulate the received signal preceding the preamble sequence. Thus, the exact start position of the preamble sequence in the signal was at sample position 512. The whole signal was then corrupted with AWGN to yield signal-to-noise ratios (SNR) of 17, 9, 5, 3 and 1 dB respectively. The graph shows the characteristic curves of the (normalized) auto-correlation of the noisy signals. The auto-correlation value *NAC* (normalized auto-correlation) is determined as in Eq. (1), which will be described in more detail below. Since the auto-correlation process can only start after 256 samples, here, the first 256 samples of the 512 sample long AWGN padding, have been received, this temporal position is taken as *NAC* sample 0 in the graph. Since also the next 256 sample constitute noise, the auto-correlation between corresponding Golay sequence samples only starts at *NAC* sample 384 (i.e., temporal position 640). Beginning at this position, the auto-correlation includes an increasing number of corresponding Golay sequence samples until at NAC sample 512 (i.e., temporal position 768) no noise samples (non preamble sequence samples) are included in the auto-correlation anymore and the *NAC* reaches its highest values. As can be understood from the above, the output of the auto-correlation process has a delay of 256 samples, i.e., the highest *NAC* values are only reached 256 samples after the actual start position of the preamble sequence in the signal. This delay must be taken into consideration in the synchronization.
The curves shown in Fig. 2 illustrate that the auto-correlation in all five noise scenarios starts out with very low values for sample positions before the start of the second preamble sequence - auto-correlating noise with noise or noise with the beginning of the first preamble sequence - and transitions over a finite transition region that is equal to the length of one Golay sequence $Ga_{128}$ to relatively higher values for positions of only preamble sequence samples (i.e., positions where only preamble sequence samples are included in the auto-correlation). As can be seen, the auto-correlation values that are reached for the only preamble sequence sample positions in all five cases are lower than 1 and differ significantly depending on the SNR of the received signal. For instance, for the 17 dB case, the auto-correlation only reaches values of up to about 0.95, for the 9 dB and 5 dB cases, it only reaches values of up to about 0.9 and 0.8, respectively, for the 3 dB case, the auto-correlation values become only as high as about 0.7, and for the 1 dB case, the highest auto-correlation values are about 0.55.

Since the ideal auto-correlation value of 1 is not reached when the received signal is noisy and since the slope in the transition region is finite, a comparison with a pre-defined threshold value may be used for evaluating the auto-correlation results. The (temporal) position at which the pre-defined threshold value is reached by the result of the auto-correlation may then be considered to determine the start of the preamble sequence. (As mentioned above, one must additionally account for the 256 sample delay of the auto-correlation process.) However, as shown in Fig. 2, the auto-correlation value curve is dependent on the SNR of the received signal. The use of a fixed threshold value in the synchronization therefore has the problem that in case the pre-defined threshold value is too high, the frame may not be detected at all, whereas in case the pre-defined threshold value is too low, the synchronization may be erroneously triggered by noise peaks.

WO 2005/074223 A1 (QUALCOMM INC) discloses an auto-correlation based synchronization scheme, which identifies the leading edge and trailing edge of the correlation curve by counting the thresholds crossing.

SUMMARY OF THE INVENTION

It is an object to the invention to provide a synchronization device for synchronizing on a received signal, which allows for an improved synchronization. It is a further object to provide a corresponding synchronization method and a receiving device for a communication system, which comprises the synchronization device.

In a first aspect of the invention, a synchronization device for synchronizing on a received signal is presented, wherein the synchronization device comprises:

- an auto-correlator for determining for each of consecutive positions of the received signal an auto-correlation value representing the auto-correlation between a portion of the received signal and a corresponding portion of a delayed version of the received signal;
- a threshold comperator for determining for each of a plurality of pre-defined threshold values a reach position of the received signal at which the corresponding auto-correlation value reaches the pre-defined threshold value; and
- a synchronizer for synchronizing on the received signal based on a relation between the reach positions.

Thus, instead of using a single pre-defined threshold value, as it is known from the prior art, a plurality of pre-defined threshold values are employed by the synchronization device according to the invention to synchronize on the received signal. In particular, by determining for each of the pre-defined threshold values a reach position of the received signal at which the corresponding auto-correlation value reaches the pre-defined threshold value and by synchronizing on the received signal based on a relation between the reach positions, it is possible to account for the common characteristics of the auto-correlation curves in different noise scenarios, such as to make the synchronization independent or at least less dependent on the noise of the received signal.

It is preferred that the auto-correlator is a normalized auto-correlator, wherein the auto-correlation value is normalized by the auto-correlation of the portion of the received signal. This has the advantage that the auto-correlation values are adjusted to a predefined value range 0 to 1, where the auto-correlation value 1 indicates a "perfect" auto-correlation, whereas the auto-correlation value 0 indicates no auto-correlation at all.

It is preferred that the relation between the reach positions is a compactness of groups of the reach positions or a gradient within groups of the reach positions. Descriptive spoken: The compactness of a group indicates how compact or close together the reach positions are located in the group. The concept of using the compactness of groups of the reach positions for a plurality of pre-defined threshold values as a means for synchronizing on the received signal is based on the insight of the inventors that the transition region of the characteristic auto-correlation curve is generally positive and monotonic before the start of a new frame. This means that the largest number of the pre-defined threshold values are reached in this range in a very short period, i.e., the compactness in this range is very high. As an alternative to the use of the compactness of the groups of the reach positions, a gradient of the reach positions may be used for synchronizing on the received signal. For instance, as shown in Fig. 2, after the positive and monotonic transition region, the slope of the characteristic auto-correlation curve generally declines to substantially smaller values. This position can be determined from the gradient of the reach positions, for instance, by determining the gradient of the gradient of the reach positions (i.e., the second derivative).

The synchronization device may be used in a receiving device for a frame-based communication system, in which the receiving device has to be synchronized to the start of a new frame. For instance, in one embodiment, the communication system is a WLAN according to IEEE 802.11ad.

It is preferred that the synchronizer is adapted to determine the groups by grouping reach positions that are all within a pre-defined distance from each other into a same group. The heuristic here is that in the transition region of the characteristic auto-correlation curve, the largest number of the pre-defined threshold values is reached in the shorted period of time. This corresponds to the compactness-based approach as described above. The pre-defined distance is then preferably chosen to equal the length of the transition region, for instance, the length of one Golay sequence $Ga_{128}$ in the example shown in Fig. 2. However, the length of the pre-defined distance does not necessarily have to correspond to the length of the transition region. In some circumstances, it may also make sense to choose a shorter pre-defined distance in order to identify the last part of the transition region in which the slope of the characteristic auto-correlation curve may be highest. This depends on the optimization and balance between the number of the plurality of threshold values, a possible filtering that may be used in order to reduce the influence of noise on the synchronization and the effort for the implementation of the synchronization device. We further note that also with the gradient-based approach, the gradient would be determined within a pre-defined distance that should be adjusted to distinguish from gradients that are due to noise.

It is preferred that the synchronizer is adapted to determine the compactness of a group based on the number of the reach positions corresponding to different pre-defined threshold values within the group. By determining how many different pre-defined threshold values have been reached by the auto-correlation value within the pre-defined distance, a simple and intuitive way of determining the compactness of a group is provided.

It is preferred that the synchronizer is adapted to determine the most compact group and to synchronize on the received signal based on a measure of the reach positions within the most compact group. As described above, it has been found by the inventors that in the transition region of the characteristic auto-correlation curve, the largest number of the pre-defined threshold values is reached in the shorted period of time. Thus, the most compact group should be well suited to identify the transition region. Using a measure of the reach positions within the most compact group as a basis for the synchronizing on the received signal therefore provides a good means for the determination of e.g. the frame start position.

It is preferred that the measure is an average of the reach positions within the most compact group. It is in general not necessary that the synchronizing on the received signal based on a relation between the reach positions is completely exact, since a receiving device may typically have an additional fine synchronization. For instance, with reference to the example shown in Fig. 2, it may not be necessary to precisely find *NAC* sample 512 (and, with this and the known 256 sample delay of the auto-correlation process, the frame start position at temporal position 512). Rather it may be sufficient to find another position in the transition region, e.g., *NAC* sample 468. So, for instance, it may alternatively be possible to use the smallest or the largest reach position within the most compact group as the measure based on which the received signal is synchronized. However, using the average of the reach positions within the most compact group is good in so far that the influence of noise is reduced compared to what would be possible if e.g. the largest reach position within the most compact group would be used.

It is preferred that the number of the plurality of pre-defined threshold values is at least 4, preferably, at least 7, more preferably, at least 10, most preferably at least 15. In general, a larger number of thresholds may allow for a more precise synchronization on the received signal.

It is preferred that the plurality of pre-defined threshold values are equidistantly spaced. This shall ensure that the precision of the synchronization remains consistent for different noise scenarios.

It is preferred that the received signal comprises a preamble sequence comprising a repeated sequence of known transmission symbols, wherein the synchronizer is adapted to synchronize on the preamble sequence of the received signal. This makes it possible to avoid the complexity of performing a more complex cross-correlation. For instance, the repeated sequence of known transmission symbols can be, e.g., in the case of an IEEE 802.11ad system, 16 repetitions of the Golay sequence $Ga_{128}$, such that the received signal can be auto-correlated with a (temporally) delayed version of itself.

It is preferred that the repeated sequence is a Golay sequence $Ga_{128}$. This sequence provides good auto-correlation characteristics, i.e., the result of auto-correlating the sequence with differently delayed versions of itself only comprises a single substantive peak value and is low or, more preferably, zero otherwise.

It is preferred that the delay is periodic with, preferably, equal to, the length of the repeated sequence. In this case, the preamble sequence should yield an auto-correlation value of 1 in the ideal, noise-free case. In contrast, other parts of the received signal that do not exhibit the same periodicity should have substantially lower auto-correlation values.

It is preferred that the pre-defined distance is equal to the length of the repeated sequence. As described above, the pre-defined distance is then preferably chosen to equal the length of the transition region, for instance, the length of one Golay sequence $Ga_{128}$ in the example shown in Fig. 2.

It is preferred that the received signal (RS) complies with the IEEE 802.11ad standard.

In another aspect of the invention, a receiving device for a communication system is presented, wherein the receiving device comprises:

- a receiver for receiving a signal; and
- the synchronization device as defined in any of claims 1 to 13 for synchronizing on the received signal.

In another aspect of the invention, a synchronization method for synchronizing on a received signal is presented, wherein the synchronization method comprises:

- determining for each of consecutive positions of the received signal an auto-correlation value representing the auto-correlation between a portion of the received signal and a corresponding portion of a delayed version of the received signal;
- determining for each of a plurality of pre-defined threshold values a reach position of the received signal at which the corresponding auto-correlation value reaches the pre-defined threshold value; and
- synchronizing on the received signal based on a relation between the reach positions.

It shall be understood that the synchronization device of claim 1, the receiving device of claim 14, and the synchronization method of claim 15 have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

BRIEF DESCRIPTION OF THE DRAWINGS

In the following drawings:

Fig. 1 shows schematically and exemplarily a frame including a preamble sequence;

Fig. 2 shows a graph that exemplarily illustrates results of an auto-correlation experiment performed by the inventors;

Fig. 3 shows schematically and exemplarily a communication system;

Fig. 4 shows schematically and exemplarily an embodiment of the receiving device of Fig. 3;

Fig. 5 shows schematically and exemplarily the reach positions of the received signal for a high noise scenario and a low noise scenario; and

Fig. 6 shows a flowchart exemplarily illustrating an embodiment of a synchronization method for synchronizing on a received signal.

DETAILED DESCRIPTION OF EMBODIMENTS

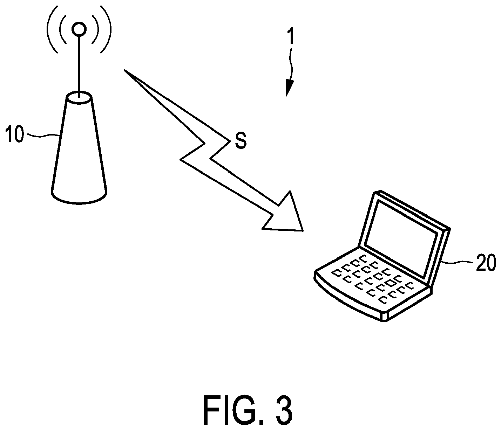

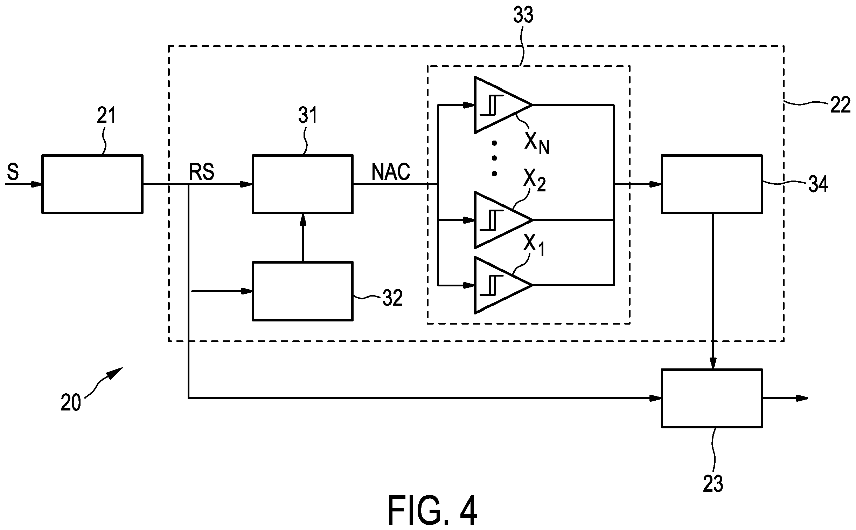

Fig. 3 shows schematically and exemplarily a communication system 1, in this case, a WLAN according to IEEE 802.11ad. The communication system 1 comprises an access point (AP) device 10 and a client device 20 that are communicating with each other. The figure shows a transmission of a signal S from the AP device 10 to the client device 20, i.e., in this situation, the AP device 10 acts as a sending device and the client device 20 acts as a receiving device. In a typical IEEE 802.11ad system, however, both devices may be able to act both as a sending device and as a receiving device, such that a signal transmission can also occur from the client device 20 to the AP device 10. As will be described in more detail with reference to Fig. 4, the receiving device, here, the client device 20, comprises a receiver 21 for receiving the signal S transmitted from the sending device, here, the access point device 10, and a synchronization device 22 for synchronizing on the received signal.

The received signal, in this embodiment, carries data in frames called PLCP protocol data units (PPDU). The PPDUs comprises a preamble sequence that is used for signal and frame detection, AGC setting, frequency offset estimation, timing synchronization, indication of antenna diversity selection and modulation (i.e., orthogonal frequency division multiplexing (OFDM) or single carrier (SC)) and channel estimation, and a payload portion that is used for transmitting the user data. The synchronization device 22 makes use of the preamble sequence to synchronize the receiving device 20 to the start of a new frame.

The PPDU preamble sequence according to the IEEE 802.11ad standard consists of two parts, a short training field (STF) and a channel estimation field (CEF). Both the STF and the CEF contain Golay complementary sequences. The STF is composed of 16 repetitions of the Golay sequence $Ga_{128}$ followed by a single repetition of the Golay sequence $-Ga_{128}$. The STF is used for synchronization of the received signal. The CEF is used for channel estimation as well as for indicating which modulation is used for the PPDU. It is composed of two Golay sequences, $Gu_{512}$ and $Gv_{512}$, where the last 128 samples of both $Gu_{512}$, and $Gv_{512}$, are equal to the last 128 samples of the short training field. These sequences are followed by a 128 sample Golay sequence, $Gv_{128}$, equal to the first 128 samples of both $Gu_{512}$ and $Gv_{512}$. In the following, we will focus on the first part of the IEEE 802.11ad preamble sequence, i.e., the short training field.

An embodiment of the receiving device 20 of Fig. 3 will now be described in more detail with reference to the block diagram that is schematically and exemplarily shown in Fig. 4. As mentioned above, the receiving device 20 comprises a receiver 21 for receiving the signal S transmitted from the sender device 10 and a synchronization device 22 for synchronizing on the received signal RS.

The synchronization device 22 comprises an auto-correlator 31, a periodic delayer 32, a threshold comperator 33 and a synchronizer 34. The periodic delayer 32 (temporally) delays the received signal RS, wherein the delay $Nd$ is chosen to equal the length of a single $Ga_{128}$ Golay sequence, i.e., 128 samples. The auto-correlator 31 then determines for each of consecutive positions of the received signal RS an auto-correlation value representing the auto-correlation between a portion of the received signal RS and a corresponding portion of a delayed version of the received signal RS provided by the periodic delayer 32. If plotted against the consecutive positions of the received signal RS, the auto-correlation values form a characteristic auto-correlation curve comparable to the curves shown in Fig. 2.

In this embodiment, the auto-correlation is a normalized auto-correlation and the auto-correlation value $NAC$ is determined as:

$$NAC[i] = \frac{\sum_{n=0}^{Ns-1} r(i-n) \cdot r^*(i-n-Nd)}{\sum_{n=0}^{Ns-1} r(i-n) \cdot r^*(i-n)} \quad , \qquad (1)$$

where r is the received signal, $i$ is the position of the received signal and $Ns$ is the length of the portion of the received signal for which the auto-correlation is performed. Here, $Ns$ = 128, i.e., it is also chosen to equal the length of a single $Ga_{128}$ Golay sequence. The equation indicates that the auto-correlator 31 needs to received at least 256 samples before the auto-correlation process can start. This is because according to Eq. (1), two sequences of 128 samples must be auto-correlated with each other in order to determine the $NAC$ value, which means that with a delay $Nd$ of 128 samples, the start of the frame can only be detected while the third Golay sequence $Ga_{128}$ is processed. Thus, the auto-correlator 31 should be able to buffer the samples required for performing the auto-correlation. Of course, if a different value is chosen for the length $Ns$ and/or for the delay $Nd,$ the processing must be adapted accordingly.

As discussed above, in the noise-free case the auto-correlation of the preamble sequence (or a portion thereof) with a periodically delayed version of itself should yield an auto-correlation value of 1, whereas other parts of the received signal that do not exhibit the periodicity of 128 samples should have substantially lower auto-correlation values. As illustrated in Fig. 2, this does not hold if the received signal is corrupted by noise, in which case the attainable auto-correlation values for the preamble sequence are lowered depending on the SNR of the received signal.

In view of this situation, the threshold comperator 33 determines for each of a plurality of pre-defined threshold values $X_1, X_2, ..., X_N$ a reach position of the received signal RS at which the corresponding auto-correlation value reaches the threshold value $X_1, X_2, ..., X_N$, and the synchronizer 34 synchronizes on the received signal RS based on a relation between the reach positions. Thus, instead of using a single pre-defined threshold value, as it is known from the prior art, a plurality of pre-defined threshold values $X_1, X_2, ..., X_N$ are employed by the synchronization device 22 according to the invention to synchronize on the received signal.

In this embodiment, the relation between the reach positions is a compactness of groups of the reach positions. Descriptive spoken: The compactness of a group indicates how compact or close together the reach positions are located in the group. The concept of using the compactness of groups of the reach positions for a plurality of pre-defined threshold values $X_1, X_2, ..., X_N$ as a means for synchronizing on the received signal is based on the insight of the inventors that the transition region of the characteristic auto-correlation curve is generally positive and monotonic before the start of a new frame. This means that the largest number of the pre-defined threshold values $X_1, X_2, ..., X_N$ are reached in this range in a very short period, i.e., the compactness in this range is very high. Here, the number N of the plurality of threshold values $X_1, X_2, ..., X_N$ is 17 and the plurality of threshold values $X_1, X_2, ..., X_N$ are equidistantly spaced from 0.15 to 0.95.

The synchronizer 34 determines the groups such that the reach positions within each group are all within a pre-defined distance D from each other. The pre-defined distance, here, is chosen to be equal to the length of the repeated Golay sequence $Ga_{128}$. This is because in the ideal, noise-free case all threshold values $X_1, X_2, ..., X_N$ should be reached within this period.

The compactness of a group, here, is determined by the synchronizer 34 based on the number of the reach positions corresponding to different pre-defined threshold values within the group. Based on the number of the reach positions corresponding to different pre-defined threshold values within the group, the synchronizer 34 then determines the most compact group, i.e., the group in which the largest number of different pre-defined threshold values has been reached by the auto-correlation value. If the same number of different pre-defined threshold values has been reached in two groups, the more compact group can preferably be determined as the group in which the variance or the sum of the reach positions within the group is smaller.

The synchronizer 34 synchronizes on the received signal RS based on a measure of the reach positions within the most compact group. In this embodiment, the measure is an average of the reach positions within the most compact group. As described above, it is in general not necessary that the synchronizing on the received signal based on a relation between the reach positions is completely exact, since a receiving device 20 may typically have an additional fine synchronization. Using the average of the reach positions within the most compact group is then good in so far that it allows finding a position in the transition region of the characteristic auto-correlation curve, wherein the influence of noise is reduced compared to what would be possible if e.g. the largest reach position within the most compact group would be used.

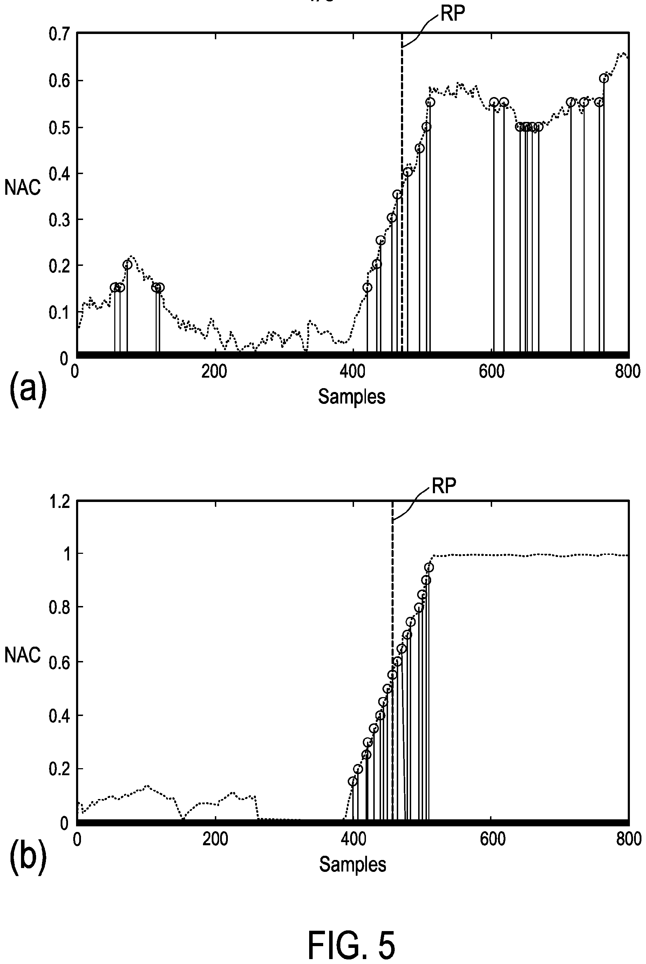

In the following, the concept of the compactness-based synchronization of the received signal RS will be further explained with reference to Fig. 5, which schematically and exemplarily shows the reach positions of the received signal RS for a high noise scenario and a low noise scenario. The high noise scenario (corresponding to a low SNR) is shown in the upper part (a) of the figure and the low noise scenario (corresponding to a high SNR) is show in the lower part (b) of the figure. As in Fig. 2, the sample positions are laid on the abscissa (x-axis) and the auto-correlation values $NAC$ are laid on the ordinate (y-axis).

As can be seen from the graphs, the characteristic auto-correlation curves differ between the high noise scenario and a low noise scenario in the values that are reached for the only preamble sequence sample positions (see also Fig. 2 in this regard). In this particular example, the values that are reached in the low noise scenario shown in Fig. 5 (b) are as high as about the ideal value of 1, whereas for the high noise scenario of Fig. 5 (a) only values of up to about 0.6 are reached. However, both characteristic auto-correlation curves have the same general appearance in that they start out with very low values for sample positions before the start of the second preamble sequence - auto-correlating noise with noise or noise with the beginning of the first preamble sequence - and transition over a finite transition region that is equal to the length of one Golay sequence $Ga_{128}$ to the relatively higher values for positions of only preamble sequence samples (i.e., positions where only preamble sequence samples are included in the auto-correlation). As can further be seen, in both case the transition region of the characteristic auto-correlation curve is positive and monotonic and the largest number of the pre-defined threshold values $X_1, X_2, ..., X_N$ are reached in this range in a very short period, i.e., the compactness in this range is highest. By applying the compactness-based approach for synchronizing on the received signal RS, the transition region can be identified in a robust manner. For instance, the synchronization is based on the average of the reach positions within the most compact group, the positions RP, which are located substantially in the center of the transition region, would be identified. Based on the positions RP, the start of the frame could then approximately be determined by adding 64 samples (corresponding to a half of the length of one Golay sequence $Ga_{128}$) and by subtracting 256 samples (to account for the 256 sample delay of the auto-correlation process).

Based on the synchronization on the received signal RS performed by the synchronizer 34, the received signal RS can be further processed in processing unit 23. For instance, an additional fine synchronization may be performed and the CEF can be processed to perform channel estimation and to determine which modulation is used for the PPDU and the payload portion that is used for transmitting the user data may be demodulated and further processed. The decoded user data may then be output to subsequent processing modules (not shown in Fig. 4).

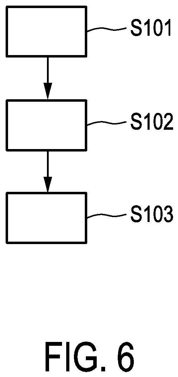

Fig. 6 shows a flowchart exemplarily illustrating an embodiment of a synchronization method for synchronizing on a received signal, which can be realized, for instance, with the embodiment of the receiving device 20 shown in Fig. 4.

In step S101, for each of consecutive positions of the received signal RS an auto-correlation value representing the auto-correlation between a portion of the received signal RS and a corresponding portion of a delayed version of the received signal RS is determined.

In step S102, for each of a plurality of pre-defined threshold values $X_1, X_2, ..., X_N$ a reach position of the received signal RS at which the corresponding auto-correlation value reaches the pre-defined threshold value $X_1, X_2, ..., X_N$ is determined.

In step S103, the synchronization on the received signal is performed based on a relation between the reach positions.

While the invention has been described in detail with reference to a WLAN system according to IEEE 802.11ad, the invention can also be used in other communication systems that require synchronization on a received signal.

While in the embodiments described with reference to Figs. 3 to 6 above, the delay $Nd$ by which the periodic delayer 32 (temporally) delays the received signal RS is chosen to equal the length of a single $Ga_{128}$ Golay sequence, i.e., 128 samples, it may be chosen differently in other embodiments. For instance, it may be chosen to be a small integer multiple, e.g., 2, 3, 4, 5 et cetera, of the length of a single $Ga_{128}$ Golay sequence.

While in the embodiments described with reference to Figs. 3 to 6 above, the compactness-based approach was used in the synchronization, the invention is not limited to this. For instance, in other embodiments the synchronization on the received signal RS based on a relation between the reach positions may make use of a gradient within groups of the reach positions.

It shall be noted that depending on the noise scenario as well as on the number and distribution of the plurality of pre-defined thresholds $X_1, X_2, ..., X_N$, not all pre-defined thresholds $X_1, X_2, ..., X_N$ may be reached by the auto-correlation values $NAC$ during the synchronization. The determining for each of a plurality of pre-defined threshold values $X_1, X_2, ..., X_N$ a reach position of the received signal RS at which the corresponding auto-correlation value reaches the threshold value $X_1, X_2, ..., X_N$ then preferably also includes the case that it is found that one or more pre-defined thresholds are not reached, wherefore no reach position exists for this/these threshold(s).

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Operations like the determining for each of consecutive positions of the received signal RS an auto-correlation value representing the auto-correlation between a portion of the received signal RS and a corresponding portion of a delayed version of the received signal RS, the determining for each of a plurality of pre-defined threshold values $X_1, X_2, ..., X_N$ a reach position of the received signal RS at which the corresponding auto-correlation value reaches the threshold value $X_1, X_2, ..., X_N$, et cetera, performed by one or several units or devices, can be performed by any other number of units or devices. These operations can be partly implemented as program code means of a computer program and/or as dedicated hardware.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

The invention relates to a synchronization device for synchronizing on a received signal. The synchronization device comprises: an auto-correlator for determining for each of consecutive positions of the received signal an auto-correlation value representing the auto-correlation between a portion of the received signal and a corresponding portion of a delayed version of the received signal; a threshold comperator for determining for each of a plurality of pre-defined threshold values a reach position of the received signal at which the corresponding auto-correlation value reaches the threshold value; and a synchronizer for synchronizing on the received signal based on a relation between the reach positions.

**Claims**

1. Synchronization device (22) for synchronizing on a received signal (RS), comprising:

   - an auto-correlator (31) for determining for each of consecutive positions of the received signal (RS) an auto-correlation value ($NAC$) representing the auto-correlation between a portion of the received signal (RS) and a corresponding portion of a delayed version of the received signal (RS);
   - a threshold comperator (33) for determining for each of a plurality of pre-defined threshold values ($X_1, X_2, ..., X_N$) a reach position of the received signal (RS) at which the corresponding auto-correlation value ($NAC$) reaches the pre-defined threshold value ($X_1, X_2, ..., X_N$); and
   - a synchronizer (34) for synchronizing on the received signal (RS) based on a relation between the reach positions.

2. The synchronization device (22) as defined in claim 1, wherein the auto-correlator (31) is a normalized auto-correlator, wherein the auto-correlation value ($NAC$) is normalized by the auto-correlation of portion of the received signal (RS).

3. The synchronization device (22) as defined in claim 1, wherein the relation between the reach positions is a compactness of groups of the reach positions or a gradient within groups of the reach positions.

4. The synchronization device (22) as defined in claim 3, wherein the synchronizer (34) is adapted to determine the groups such that the reach positions within each group are all within a pre-defined distance from each other.

5. The synchronization device (22) as defined in claim 3 or 4, wherein the synchronizer (34) is adapted to determine the compactness of a group based on the number of the reach positions corresponding to different pre-defined threshold values within the group.

6. The synchronization device (22) as defined in any of claims 3 to 5, wherein the synchronizer (34) is adapted to determine the most compact group and to synchronize on the received signal (RS) based on a measure of the reach positions within the most compact group.

7. The synchronization device (22) as defined in claim 6, wherein the measure is an average of the reach positions within the most compact group.

8. The synchronization device (22) as defined in any of claims 1 to 7, wherein the number ($N$) of the plurality of pre-defined threshold values ($X_1$, $X_2$, ..., $X_N$) is at least 4, preferably, at least 7, more preferably, at least 10, most preferably at least 15.

9. The synchronization device (22) as defined in any of claims 1 to 8, wherein the plurality of pre-defined threshold values ($X_1$, $X_2$, ..., $X_N$) are equidistantly spaced.

10. The synchronization device (22) as defined in any of claims 1 to 9, wherein the received signal comprises a preamble sequence comprising a repeated sequence of known transmission symbols, preferably, a Golay sequence $Ga_{128}$, wherein the synchronizer (34) is adapted to synchronize on the preamble sequence of the received signal (RS).

11. The synchronization device (22) as defined in claim 10, wherein the delay is periodic with, preferably, equal to, the length of the repeated sequence.

12. The synchronization device (22) as defined in claim 10 when referring back to any of claims 4 to 9, wherein the pre-defined distance is equal to the length of the repeated sequence.

13. The synchronization device (22) as defined in any of claims 1 to 12, wherein the received signal (RS) complies with the IEEE 802.11ad standard.

14. Receiving device (20) for a communication system (1), comprising:

- a receiver (21) for receiving a signal (S); and
- the synchronization device (22) as defined in any of claims 1 to 13 for synchronizing on the received signal (RS).

15. Synchronization method for synchronizing on a received signal (RS), comprising:

- determining for each of consecutive positions of the received signal (RS) an auto-correlation value (*NAC*) representing the auto-correlation between a portion of the received signal (RS) and a corresponding portion of a delayed version of the received signal (RS);
- determining for each of a plurality of pre-defined threshold values ($X_1$, $X_2$, ..., $X_N$) a reach position of the received signal (RS) at which the corresponding auto-correlation value (*NAC*) reaches the pre-defined threshold value ($X_1$, $X_2$, ..., $X_N$); and
- synchronizing on the received signal (RS) based on a relation between the reach positions.

**Patentansprüche**

1. Synchronisationsvorrichtung (22) zur Synchronisation auf ein empfangenes Signal (RS) umfassend:

- einen Autokorrelator (31) zum Bestimmen eines Autokorrelationswertes (NAC), der die Autokorrelation zwischen einem Abschnitt des empfangenen Signals (RS) und einem entsprechenden Abschnitt einer verzögerten Version des empfangenen Signals (RS) darstellt, für jede aufeinanderfolgende Position des empfangenen Signals (RS);

- einen Schwellenwertkomparator (33) zum Bestimmen einer Erreichungsposition des empfangenen Signals (RS) für jeden aus einer Vielzahl von vordefinierten Schwellenwerten ($X_1$, $X_2$, ..., $X_N$) bei der der entsprechende Autokorrelationswert (NAC) den vordefinierten Schwellenwert ($X_1$, $X_2$, ..., $X_N$) erreicht; und
- einen Synchronisierer (34) zum Synchronisieren auf das empfangene Signal (RS) basierend auf einer Zuordnung zwischen den Erreichungspositionen.

2. Synchronisationsvorrichtung (22) nach Anspruch 1, wobei der Autokorrelator (31) ein normierter Autokorrelator ist, wobei der Autokorrelationswert (NAC) durch die Autokorrelation des Abschnitts des empfangenen Signals (RS) normiert wird.

3. Synchronisationsvorrichtung (22) nach Anspruch 1, wobei die Zuordnung zwischen den Erreichungspositionen eine Kompaktheit von Gruppen der Erreichungspositionen oder ein Gradient innerhalb von Gruppen der Erreichungspositionen ist.

4. Synchronisationsvorrichtung (22) nach Anspruch 3, wobei der Synchronisierer (34) ausgebildet ist, die Gruppen so zu bestimmen, dass die Erreichungsposition innerhalb jeder Gruppe alle innerhalb eines vorbestimmten Abstands voneinander liegen.

5. Synchronisationsvorrichtung (22) nach Anspruch 3 oder 4, wobei der Synchronisierer (34) ausgebildet ist, die Kompaktheit einer Gruppe basierend auf der Anzahl der Erreichungspositionen korrespondierend mit verschiedenen vorbestimmten Schwellenwerten innerhalb der Gruppe zu bestimmen.

6. Synchronisationsvorrichtung (22) nach einem der Ansprüche 3 bis 5, wobei der Synchronisierer (34) ausgebildet ist, die kompakteste Gruppe zu bestimmen und auf das empfangene Signal (RS) basierend auf einem Maß der Erreichungspositionen innerhalb der kompaktesten Gruppe zu synchronisieren.

7. Synchronisationsvorrichtung (22) nach Anspruch 6, wobei das Maß ein Mittelwert der Erreichungspositionen innerhalb der kompaktesten Gruppe ist.

8. Synchronisationsvorrichtung (22) nach einem der Ansprüche 1 bis 7, wobei die Anzahl (N) der Vielzahl von vordefinierten Schwellenwerten ($X_1$, $X_2$, ..., $X_N$) mindestens 4 ist, bevorzugt mindestens 7, bevorzugter mindestens 10 und am bevorzugtesten mindestens 15 ist.

9. Synchronisationsvorrichtung (22) nach einem der Ansprüche 1 bis 8, wobei die Vielzahl von vordefinierten Schwellenwerten ($X_1$, $X_2$, ..., $X_N$) äquidistant beabstandet sind.

10. Synchronisationsvorrichtung (22) nach einem der Ansprüche 1 bis 9, wobei das empfangene Signal (RS) eine Präambelsequenz umfasst, die eine sich wiederholende Sequenz von bekannten Übertragungssymbolen, vorzugsweise eine Golay-Sequenz $Ga_{128}$, umfasst, wobei der Synchronisierer (34) ausgebildet ist, auf die Präambelsequenz des empfangenen Signals (RS) zu synchronisieren.

11. Synchronisationsvorrichtung (22) nach Anspruch 10, wobei die Verzögerung periodisch, vorzugsweise gleich, der Länge der wiederholten Sequenz ist.

12. Synchronisationsvorrichtung (22) nach Anspruch 10, wenn dieser sich auf einen der Ansprüche 4 bis 9 bezieht, wobei der vordefinierte Abstand gleich der Länge der wiederholten Sequenz ist.

13. Synchronisationsvorrichtung (22) nach einem der Ansprüche 1 bis 12, wobei das empfangene Signal (RS) dem Standard IEEE 802.11ad entspricht.

14. Empfangsvorrichtung (20) für ein Kommunikationssystem (1), umfassend:

- einen Empfänger (21) zum Empfangen eines Signals (S); und
- eine Synchronisationsvorrichtung (22) nach einem der Ansprüche 1 bis 13 zum Synchronisieren auf das empfangene Signal (RS)

15. Synchronisationsverfahren zum Synchronisieren auf ein empfangenes Signal (RS), umfassend:

- Bestimmen eines Autokorrelationswertes (NAC), der die Autokorrelation zwischen einem Abschnitt des empfangenen Signals (RS) und einem entsprechenden Abschnitt einer verzögerten Version des empfangenen Signals (RS) darstellt, für jede aufeinanderfolgende Position des empfangenen Signals (RS);

- Bestimmen einer Erreichungsposition des empfangenen Signals (RS) für jeden aus einer Vielzahl von vordefinierten Schwellenwerten ($X_1$, $X_2$, ..., $X_N$) bei der der entsprechende Autokorrelationswert (NAC) den vordefinierten Schwellenwert ($X_1$, $X_2$, ..., $X_N$) erreicht; und

- Synchronisieren auf das empfangene Signal (RS) basierend auf einer Zuordnung zwischen den Erreichungspositionen.

## Revendications

1. Dispositif de synchronisation (22) destiné à se synchroniser sur un signal reçu (RS), comprenant :

   un autocorrélateur (31) pour déterminer pour chacune des positions consécutives du signal reçu (RS) une valeur d'auto-corrélation (*NAC*) représentant l'autocorrélation entre une partie du signal reçu (RS) et une partie correspondante d'une version retardée du signal reçu (RS) ;

   un comparateur de seuil (33) pour déterminer pour chacune d'une pluralité de valeurs de seuil prédéfinies *($X_I$, $X_2$, ..., $X_N$)* une position de seuil atteint *(reach)* du signal reçu (RS) à laquelle la valeur d'auto-corrélation (*NAC*) correspondante atteint la valeur de seuil prédéfinie ($X_I$, $X_2$, ..., $X_N$) ; et

   un synchroniseur (34) destiné à se synchroniser sur le signal reçu (RS) sur la base d'une relation entre les positions de seuil atteint.

2. Dispositif de synchronisation (22) selon la revendication 1, dans lequel l'auto-corrélateur (31) est un auto-corrélateur normalisé, dans lequel la valeur d'auto-corrélation (*NAC*) est normalisée par l'auto-corrélation de la partie du signal reçu (RS).

3. Dispositif de synchronisation (22) selon la revendication 1, dans lequel la relation entre les positions de seuil atteint est une compacité de groupes des positions de seuil atteint ou une pente au sein des groupes des positions de seuil atteint.

4. Dispositif de synchronisation (22) selon la revendication 3, dans lequel le synchroniseur (34) est adapté pour déterminer les groupes de telle sorte que les positions de seuil atteint dans chaque groupe soient toutes à une distance prédéfinie les unes des autres.

5. Dispositif de synchronisation (22) selon la revendication 3 ou 4, dans lequel le synchroniseur (34) est adapté pour déterminer la compacité d'un groupe sur la base du nombre de positions de seuil atteint correspondant à différentes valeurs de seuil prédéfinies dans le groupe.

6. Dispositif de synchronisation (22) selon l'une quelconque des revendications 3 à 5, dans lequel le synchroniseur (34) est adapté pour déterminer le groupe le plus compact et pour se synchroniser sur le signal reçu (RS) sur la base d'une mesure des positions de seuil atteint au sein du groupe le plus compact.

7. Dispositif de synchronisation (22) selon la revendication 6, dans lequel la mesure est une moyenne des positions de seuil atteint dans le groupe le plus compact.

8. Dispositif de synchronisation (22) selon l'une quelconque des revendications 1 à 7, dans lequel le nombre (*N*) de la pluralité de valeurs de seuil prédéfinies ($X_I$, $X_2$, ..., $X_N$) est d'au moins 4, de préférence au moins 7, plus préférablement au moins 10, de manière particulièrement préférée au moins 15.

9. Dispositif de synchronisation (22) selon l'une quelconque des revendications 1 à 8, dans lequel la pluralité de valeurs de seuil prédéfinies ($X_I$, $X_2$, ..., $X_N$) sont espacées de façon équidistante.

10. Dispositif de synchronisation (22) selon l'une quelconque des revendications 1 à 9, dans lequel le signal reçu comprend une séquence de préambule comprenant une séquence répétée de symboles de transmission connus, de préférence une séquence de Golay $Ga_{128}$, dans lequel le synchroniseur (34) est adapté pour se synchroniser sur la séquence de préambule du signal reçu (RS).

**11.** Dispositif de synchronisation (22) selon la revendication 10, dans lequel le retard est périodique avec, de préférence égal à, la longueur de la séquence répétée.

**12.** Dispositif de synchronisation (22) selon la revendication 10, lorsqu'elle fait référence à l'une quelconque des revendications 4 à 9, dans lequel la distance prédéfinie est égale à la longueur de la séquence répétée.

**13.** Dispositif de synchronisation (22) selon l'une quelconque des revendications 1 à 12, dans lequel le signal reçu (RS) est conforme à la norme IEEE 802.11ad.

**14.** Dispositif de réception (20) pour un système de communication (1), comprenant :

- un récepteur (21) pour recevoir un signal (S) ; et
- le dispositif de synchronisation (22) tel que défini dans l'une quelconque des revendications 1 à 13, destiné à se synchroniser sur le signal reçu (RS).

**15.** Procédé de synchronisation pour la synchronisation sur un signal reçu (RS), comprenant les étapes consistant à :

- déterminer, pour chacune des positions consécutives du signal reçu (RS) une valeur d'auto-corrélation (*NAC*) représentant l'auto-corrélation entre une partie du signal reçu (RS) et une partie correspondante d'une version retardée du signal reçu (RS) ;
- déterminer pour chacune d'une pluralité de valeurs de seuil prédéfinies ($X_1$, $X_2$, ..., $X_N$) une position de seuil atteint du signal reçu (RS) à laquelle la valeur d'auto-corrélation (*NAC*) correspondante atteint la valeur de seuil prédéfini ($X_1$, $X_2$, ..., $X_N$) ; et
- se synchroniser sur le signal reçu (RS) sur la base d'une relation entre les positions de seuil atteint.

| PRB | SIG | DS 1 | DS 2 | DS 3 | | DS N |
|-----|-----|------|------|------|--|------|

# FIG. 1

# FIG. 2

# FIG. 3

FIG. 4

EP 3 439 256 B1

(a)

(b)

FIG. 5

FIG. 6

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005074223 A1